# EUROPEAN PATENT SPECIFICATION

(11) **EP 4 391 316 B1**
(45) Date of publication and mention of the grant of the patent: **04.11.2026**
(21) Application number: 23213608.5
(22) Date of filing: 01.12.2023
(51) Int. Cl.: H02K 1/32, H02K 9/19, H02K 1/28, H02K 7/00

(54) **ROTOR FOR AN ELECTRIC MACHINE, IN PARTICULAR FOR AN ELECTRIC MOTOR**
ROTOR FÜR EINE ELEKTRISCHE MASCHINE, INSBESONDERE FÜR EINEN ELEKTROMOTOR
ROTOR POUR UNE MACHINE ÉLECTRIQUE, EN PARTICULIER POUR UN MOTEUR ÉLECTRIQUE

(30) Priority: 21.12.2022 FR 2214106
(43) Date of publication of application: 26.06.2024
(73) Proprietor: Valeo Electrification, 95800 Cergy (FR)
(72) Inventor: Schlereth, Alexander, 97616 Bad Neustadt a.d.Saale (DE); Wolf, Nico, 97616 Bad Neustadt a.d.Saale (DE)
(74) Representative: Valeo Powertrain Systems

(56) References cited:
- DE-T5- 112018 004 871
- JP-A- 2009 219 186
- JP-A- 2012 105 487
- JP-U- H04 101 255

## Description

The invention relates to a rotor for an electric machine, in particular for an electric motor of the type which is used for driving vehicles. The vehicles can be in particular commercial vehicles or passenger cars driven either entirely with electric energy or hybrid vehicles. The invention further relates to an electric machine with such rotor.

It is known that electric machines used for driving vehicles should be cooled in order to prevent that the waste heat generated during operation results in excessively high temperatures. It is known to guide a coolant (for example oil) through certain parts of the electric machines so as to transport the waste heat to an external heat exchanger where it is discharged towards the environment.

Numerous designs of coolant paths are known in the prior art. A design of a coolant path wherein a rotor shaft has an axial coolant opening connected via radial coolant openings to coolant channels extending in axial direction through a stack formed from the rotor plates is shown in JP 2009 219186 A. The object of the invention is to provide a rotor for an electric machine in which the path for the coolant can be formed in a simple manner.

In order to solve this object, the invention provides a rotor for an electric machine, in particular for an electric motor, the rotor having a rotor shaft and a plurality of rotor plates mounted on the rotor shaft, the rotor plates having cutouts which form coolant channels extending in an axial direction through the stack formed from the rotor plates, the rotor shaft having an axial coolant opening, a plurality of radial coolant openings being provided which connect the axial coolant opening in the rotor shaft with the coolant channels in the stack of rotor plates, the rotor further having at least an endplate which forms a radial end for the radial coolant openings. The endplates of the rotor are usually of sufficient thickness for mechanical reasons, namely to compress the rotor plates mounted in the rotor shaft. The volume of the endplates can be used to prolong or terminate a coolant path formed in the rotor shaft. No additional mechanical elements are necessary to this end. Further, the endplate can be easily machined to have the required configuration.

Preferably, the endplate has a closed contact surface for abutting at the stack of rotor plates so that the entirety of rotor plates is evenly supported or compressed in an axial direction.

According to the invention, the rotor shaft has a radially enlarged end portion forming a shoulder at which the stack of rotor plates abuts in an axial direction, the radial coolant openings extending through the end portion towards an outer circumference thereof. The enlarged end portion allows directly absorbing axial loads at the radially inner portion of the rotor plates and offers sufficient space for accommodating the radial coolant openings.

In view of manufacturing ease, the end portion preferably has at least one connecting opening for connecting the coolant channels formed in the stack of rotor plates to the radial coolant openings in the end portion.

The connecting opening can be generated easily by machining so as to form an annular groove in the end portion at the side facing the stack of rotor plates.

In order to preserve a larger supporting area at the enlarged end portion, the connecting opening can be formed by a plurality of axially extending openings which connect the coolant channels in the stack of rotor plates to the radial coolant openings.

For achieving the desired axial compression of the rotor plates and to ensure that a coolant path formed in an axial direction through the stack of rotor plates is essentially without leakage, a clamping element is arranged on the rotor shaft for axially clamping the stack of rotor plates, in particular a clamping nut.

The invention will be described with reference to embodiments which are shown in the enclosed drawings. In the drawings,
[Fig. 1] shows a schematic cross-section through a rotor according to a first embodiment not belonging to the invention,
[Fig. 2] shows a plan view of part of a rotor plate used in the rotor of Figure 1,
[Fig. 3] shows a schematic cross-section through the rotor of Figure 1 along plane III-III,
[Fig. 4] shows a cross-section along plane IV-IV of Figure 1,
[Fig. 5] shows a schematic cross-section along plane V-V of Figure 1,
[Fig. 6] schematically shows a second embodiment, not belonging to the invention,
[Fig. 7] schematically shows a top view of an endplate of an alternative to the second embodiment,
[Fig. 8] schematically shows a third embodiment, not belonging to the invention, and
[Fig. 9] schematically shows a fourth embodiment of the invention.

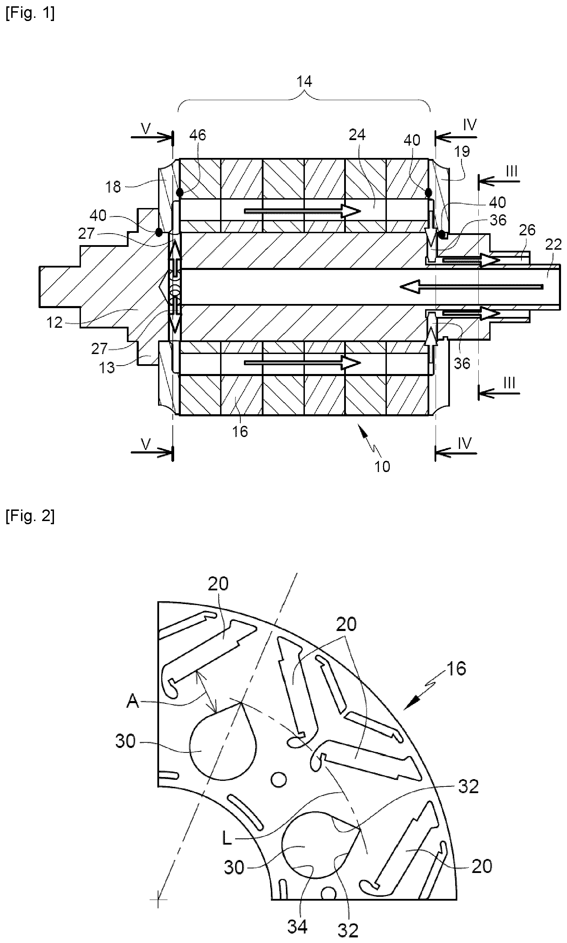

In Figure 1, a rotor 10 is shown which is used in an electric machine such as an electric motor. The motor can in particular be used to drive a vehicle such as a car or a truck, the vehicle been either entirely driven with electric energy or being a hybrid vehicle.

Rotor 10 comprises a rotor shaft 12, a stack 14 of rotor plates 16, and two endplates 18, 19. The stack 14 of rotor plates 16 is held axially clamped between endplates 18, 19.

Each rotor plate 16 has a plurality of recesses 20 which together with the recesses of axially adjacent rotor plates 16 form pockets for receiving magnets. The magnets are permanent magnets made from rare earth materials. It is also possible to use ferrite magnets.

In a manner known per se, the magnets are grouped in segments, with the angular position of the magnets in one segment slightly differing from the angular position of the magnets in an adjacent segment. This is advantageous regarding torque ripples and the reduction of noise.

Rotor 10 is provided with a coolant path which mainly consists of an inlet channel 22, a plurality of coolant passages 24 and a plurality of outlet channels 26. The coolant path is closed in that the coolant flow admitted into inlet channel 22 exits through outlet channels 26. No coolant (apart from a very minor potential leakage flow) is discharged from rotor 10 except for the entire coolant flow exiting through outlet channels 26.

Inlet channel 22 is formed by an axial bore which extends through the majority of rotor shaft 12. As can be seen in Figure 1, inlet channel 22 extends from one axial end of rotor shaft 12 through rotor shaft 12 to a position which is rearwardly of the end of the axial end of stack 14 which is opposite to the side where inlet channel 22 opens. In other words, inlet channel 22 is a blind bore extending approximately to the axial position where the left endplate 18 in Figure 1 is arranged.

Close to the axial end of inlet channel 22, a plurality of radially extending coolant openings 27 is provided in rotor shaft 12. Coolant openings 27 open on the outer circumferential surface of rotor shaft 12 and are arranged inwardly of a shoulder formed by an radially enlarged end portion of rotor shaft 12 at which endplate 18 abuts.

Endplate 18 has a plurality of radially extending recesses 28 at its inner circumference. The position and the spacing of recesses 28 approximately coincides with the position of radial coolant openings 27.

Recesses 28 do not extend through the entire endplate 18, 19. In other words, the depth of each recess, viewed in an axial direction, is less than the thickness of the respective endplate 18, 19.

Recesses 28 serve for connecting the radially outer end of coolant openings 27 to coolant passages 24 formed within the stack 14 of rotor plates 16. Coolant passages 24 are formed from a plurality of cutouts 30 formed in each rotor plate 16.

Endplate 18 thus serves as a radial end for the radial coolant openings formed from the radial coolant openings 27 in rotor shaft 12 and from the recesses 28.

Each cutout 30 has a drop-shaped cross-section (please see in particular Figure 2), the contour of each cutout 30 having two straight portions 32 and a curved portion 34. Straight portions 32 are provided for interaction with a mounting tool which defines the angular or circumferential position of each rotor plate 16 on rotor shaft 12. In order to achieve the slight angular offset of the pockets for the magnets over the stack 14 of rotor plates, the angular position of cutouts 30 slightly differs among different types of rotor plates. In view of the ability of cutouts 30 to form coolant passage 24, cutouts 30 have a comparatively large cross-section.

Further, cutouts 30 are arranged between adjacent recesses 20 which form the pockets for receiving the magnets so that waste heat generated in this portion of the rotor can very effectively be discharged towards the coolant flowing through coolant passages 24. The distance between the pocket formed by recesses 20 and coolant passage 24 formed by cutouts 30 is designated in Figure 2 with arrow A.

Dashed line L shows that the radially outer end of cutouts 30 overlap with the radially inner ends of recesses 20, ensuring that the waste heat can be very effectively dissipated.

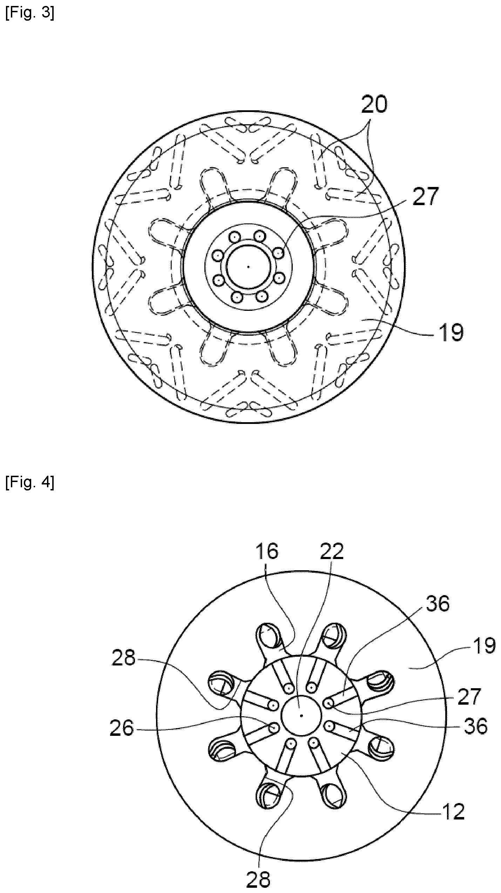

As can be seen in Figure 1 and Figure 4, endplate 19 arranged at the end of stack 14 of rotor plates 16 which is adjacent to the open end of inlet channel 22, is provided with recesses 28 in a manner similar to endplate 18 arranged at the opposite end.

At the position of recesses 28 in endplate 19, rotor shaft 12 is provided with a plurality of radial coolant openings 36 which connect coolant passages 24 (via recesses 28) to outlet channels 26. In this manner, a closed coolant path is formed by inlet channel 22, radial coolant openings 27, recesses 28, coolant passages 24, recesses 28, radial coolant openings 36 and outlet channels 26.

In a manner similar to endplate 18, endplate 19 also serves as a radial end of the coolant passage formed from recesses 28 and coolant openings 36.

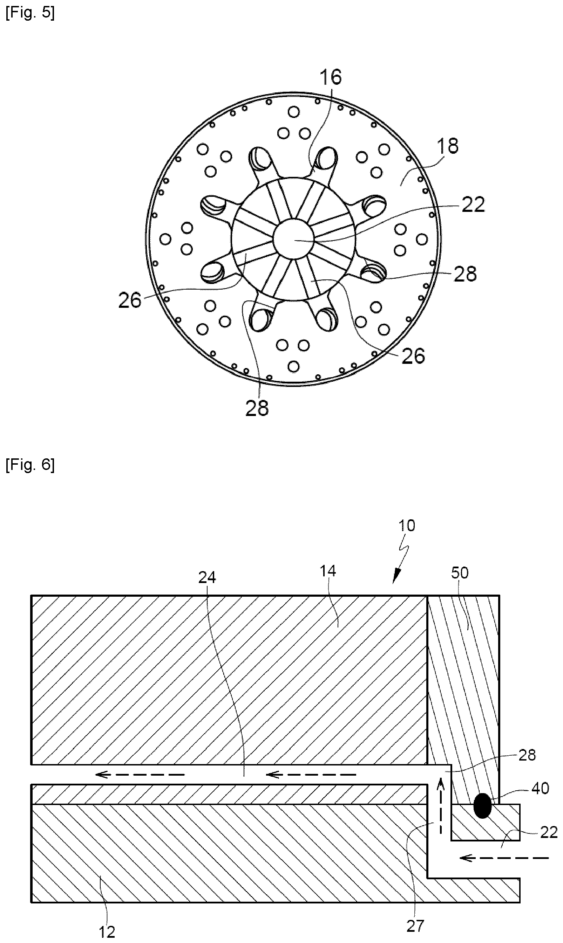

As can be seen in Figures 4 and 5, recesses 28 are wider than coolant passages 24. It is therefore possible to use standardized endplates 18, 19 which do not have to perfectly match with their recesses 28 the circumferential position of coolant passages 24. The slight angular offset does not negatively affect the available cross-section for the coolant flow.

In order to reduce a leakage of coolant, seals can be used to seal between endplate 18 and an radially enlarged end portion 13 on rotor shaft 12, between endplate 18 and the adjacent rotor plate 16, between adjacent rotor plates, between endplate 19 and the adjacent rotor plate 16 and between endplate 19 and rotor shaft 12. Reference numeral 40 is used for designating potential positions of a seal or a sealing material.

Figure 6 shows a second embodiment. For elements known from the first embodiment, the same reference numerals are used, and reference is made to the above comments.

In the embodiment of Figure 6, the inlet of the coolant path is formed by a combination of radially extending coolant openings 27 in rotor shaft 12 and an endplate 50. Endplate 50 is similar to endplate 19 in that it is axially held in rotor shaft 12 by a nut (not shown in Figure 6). Thus, endplate 50 (more precisely: the radially outer ends of recesses 28) forms a radial end for the radially extending portion of the coolant path so that the coolant path is diverted from a radial direction towards an axial direction into the cutouts of the rotor plates.

A seal 40 is used for preventing leakage of the coolant.

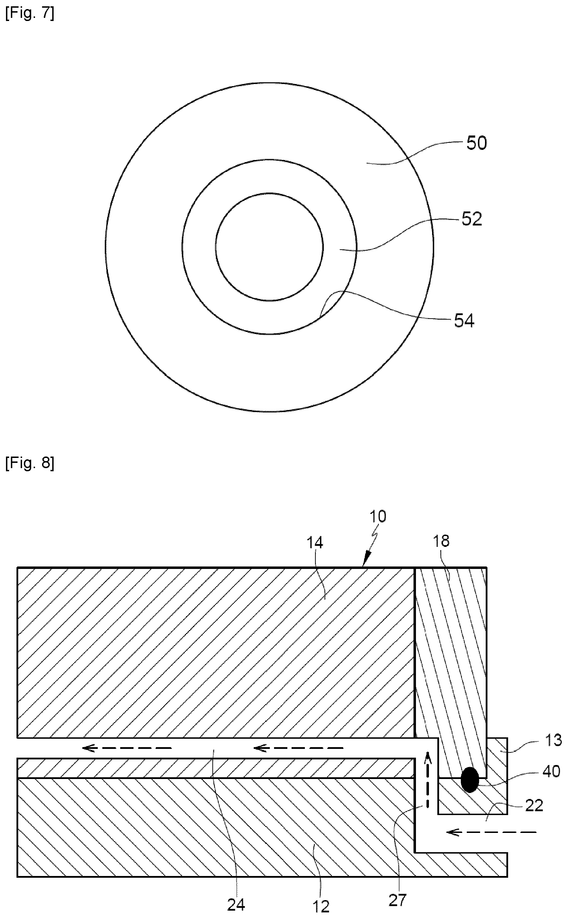

An alternative to the second embodiment is shown in Figure 7. Instead of a plurality of separate recesses, an annular groove 52 is provided at the radially inner end of endplate 50 on the side facing the rotor plates 16, with the radially outer surface 54 of groove 52 serving as the radial end of the coolant openings.

Figure 8 shows a third embodiment. For elements known from the first and second embodiments, the same reference numerals are used, and reference is made to the above comments.

The third embodiment largely corresponds to the first embodiment, with the difference being that enlarged end portion 13 of rotor shaft 12 and endplate 18 abutting at the shoulder formed by enlarged end portion 13, are here arranged at the "coolant inlet side" of rotor shaft 12.

In a manner similar to the variant shown in Figure 7, endplate 18 can be provided with an annular groove instead of a plurality of the separate radial recesses. In any case, the outer radial end of the respective configuration (either circumferential wall of the groove or outer end of each recess) forms the radial end of the coolant opening and marks the diversion of the coolant from a radial flow direction towards an axial flow direction.

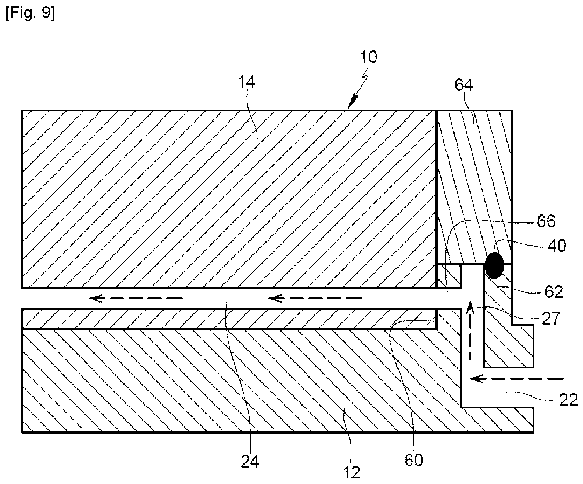

Figure 9 shows a fourth embodiment of the invention. For elements known from the previous embodiments, the same reference numerals are used, and reference is made to the above comments.

The difference between the fourth embodiment and the previous embodiments is that in the fourth embodiment, the axial support for the stack or rotor plates 16 is composed of a shoulder 60 on a radially enlarged end portion 62 of the rotor shaft 12, and an endplate 64 which is arranged on the outer circumference of end portion 62.

Coolant openings 27 extend through enlarged end portion 62 and terminate at the circumferential outer surface of end portion 62. There, they are closed by the inner circumferential surface of endplate 64.

Enlarged end portion 62 is provided at its side facing the rotor plates 16 with a plurality of connecting openings 66 which connect radial coolant openings 27 with coolant passages 24.

As an alternative to separate connecting openings 66, a circumferential groove could be used in shoulder 60 on the side facing the rotor plates 16.

## Claims

1. A rotor (10) for an electric machine, in particular for an electric motor, the rotor (10) having a rotor shaft (12) and a plurality of rotor plates (16) mounted on the rotor shaft (12), the rotor plates (16) having cutouts (30) which form coolant channels (24) extending in an axial direction through the stack formed from the rotor plates (16), the rotor shaft (12) having an axial coolant opening (22), a plurality of radial coolant openings (27; 36) being provided which connect the axial coolant opening (22) in the rotor shaft (12) with the coolant channels (24) in the stack of rotor plates (16), the rotor (10) further having an endplate (18; 19, 50; 64) which forms a radial end for the radial coolant openings (27),
wherein the rotor shaft (12) has a radially enlarged end portion (62) forming a shoulder (60), **characterized in that** the stack of rotor plates (16) abuts the shoulder (60) in an axial direction and that the radial coolant openings (27) extend through the end portion (62) towards an outer circumference thereof.

2. The rotor (10) of claim 1 wherein the endplate (64) has a closed contact surface for abutting at the stack of rotor plates (16).

3. The rotor (10) of claim 1 wherein the end portion (62) has at least one connecting opening (66) for connecting the coolant channels (24) formed in the stack of rotor plates (16) to the radial coolant openings (27) in the end portion.

4. The rotor (10) of claim 3 wherein the connecting opening (66) is formed by an annular groove in the end portion at the side facing the stack of rotor plates (16).

5. The rotor (10) of claim 3 wherein the connecting opening (66) is formed by a plurality of axially extending openings which connect the coolant channels (24) in the stack of rotor plates (16) to the radial coolant openings (27).

6. The rotor (10) of claim 1 wherein a clamping element is arranged on the rotor shaft (12) for axially clamping the stack of rotor plates (16), in particular a clamping nut.

## Patentansprüche

1. Ein Rotor (10) für eine elektrische Maschine, insbesondere für einen Elektromotor, wobei der Rotor (10) eine Rotorwelle (12) und mehrere auf der Rotorwelle (12) montierte Rotorscheiben (16) aufweist, wobei die Rotorscheiben (16) Aussparungen (30) aufweisen, die Kühlmittelkanäle (24) bilden, die sich in axialer Richtung durch den aus den Rotorscheiben (16) gebildeten Stapel erstrecken, wobei die Rotorwelle (12) eine axiale Kühlmittelöffnung (22) sowie mehrere radiale Kühlmittelöffnungen (27; 36) vorgesehen sind, die die axiale Kühlmittelöffnung (22) in der Rotorwelle (12) mit den Kühlmittelkanälen (24) im Stapel der Rotorplatten (16) verbinden, wobei der Rotor (10) ferner eine Endplatte (18; 19, 50; 64) aufweist, die ein radiales Ende für die radialen Kühlmittelöffnungen (27) bildet,
wobei die Rotorwelle (12) einen radial vergrößerten Endabschnitt (62) aufweist, der eine Schulter (60) bildet, **dadurch gekennzeichnet, dass** der Rotorplattenstapel (16) in axialer Richtung an die Schulter (60) anstößt und dass sich die radialen Kühlmittelöffnungen (27) durch den Endabschnitt (62) hin zu dessen Außenumfang erstrecken.

2. Der Rotor (10) nach Anspruch 1, wobei die Endplatte (64) eine geschlossene Kontaktfläche zum Anlegen an den Stapel aus Rotorplatten (16) aufweist.

3. Rotor (10) nach Anspruch 1, wobei der Endabschnitt (62) mindestens eine Verbindungsöffnung (66) aufweist, um die im Stapel von Rotorplatten (16) ausgebildeten Kühlmittelkanäle (24) mit den radialen Kühlmittelöffnungen (27) im Endabschnitt zu verbinden.

4. Der Rotor (10) nach Anspruch 3, wobei die Verbindungsöffnung (66) durch eine ringförmige Nut im Endabschnitt auf der dem Stapel von Rotorscheiben (16) zugewandten Seite ausgebildet ist.

5. Der Rotor (10) nach Anspruch 3, wobei die Verbindungsöffnung (66) gebildet wird durch eine Vielzahl von sich axial erstreckenden Öffnungen, die die Kühlmittelkanäle (24) im Stapel von Rotorplatten (16) mit den radialen Kühlmittelöffnungen (27) verbinden.

6. Der Rotor (10) nach Anspruch 1, wobei auf der Rotorwelle (12) ein Klemmelement zum axialen Festklemmen des Rotorplattenstapels (16) angeordnet ist, insbesondere eine Klemmutter.

## Revendications

1. Rotor (10) destiné à une machine électrique, en particulier à un moteur électrique, le rotor (10) comportant un arbre de rotor (12) et une pluralité de plaques de rotor (16) montées sur l'arbre de rotor (12), les plaques de rotor (16) comportant des découpes (30) qui forment des canaux de refroidissement (24) s'étendant dans une direction axiale à travers l'empilement constitué par les plaques de rotor (16), l'arbre de rotor (12) comportant une ouverture de refroidissement axiale (22), une pluralité d'ouvertures de refroidissement radiales (27 ; 36) étant prévues, lesquelles relient l'orifice axial de circulation de fluide de refroidissement (22) de l'arbre de rotor (12) aux canaux de circulation de fluide de refroidissement (24) dans l'empilement de plaques de rotor (16), le rotor (10) comportant en outre une plaque d'extrémité (18 ; 19, 50 ; 64) qui forme une extrémité radiale pour les orifices radiaux de circulation de fluide de refroidissement (27),
dans lequel l'arbre de rotor (12) comporte une partie d'extrémité (62) élargie radialement formant un épaulement (60),
**caractérisé en ce que** l'empilement de plaques de rotor (16) vient en butée contre l'épaulement (60) dans une direction axiale et **en ce que** les orifices radiaux de refroidissement (27) s'étendent à travers la partie d'extrémité (62) vers une circonférence extérieure de celle-ci.

2. Le rotor (10) selon la revendication 1, dans lequel la plaque d'extrémité (64) présente une surface de contact fermée destinée à venir en butée contre l'empilement de plaques de rotor (16).

3. Le rotor (10) selon la revendication 1, dans lequel la partie d'extrémité (62) comporte au moins une ouverture de raccordement (66) destinée à relier les canaux de refroidissement (24) formés dans l'empilement de plaques de rotor (16) aux ouvertures radiales de refroidissement (27) situées dans la partie d'extrémité.

4. Le rotor (10) selon la revendication 3, dans lequel l'ouverture de raccordement (66) est formée par une rainure annulaire dans la partie d'extrémité, du côté faisant face à l'empilement de plaques de rotor (16).

5. Le rotor (10) selon la revendication 3, dans lequel l'ouverture de raccordement (66) est formée par une pluralité d'ouvertures s'étendant axialement qui relient les canaux de refroidissement (24) de l'empilement de plaques de rotor (16) aux ouvertures radiales de refroidissement (27).

6. Le rotor (10) selon la revendication 1, dans lequel un élément de serrage est disposé sur l'arbre de rotor (12) afin de serrer axialement la pile de plaques de rotor (16), en particulier un écrou de serrage.
